# DEMANDE DE BREVET EUROPEEN

(11) **EP 0 713 209 A2**
(43) Date de publication de la demande: **22.05.1996**
(21) Numéro de dépôt: 95402546.6
(22) Date de dépôt: 14.11.1995
(51) Int. Cl.: G11B 5/31

(54) **Procédé de réalisation d'une tête magnétique verticale et tête magnétique correspondante**

(30) Priorité: 16.11.1994 FR 9413692
(71) Demandeur: COMMISSARIAT A L'ENERGIE ATOMIQUE, F-75015 Paris Cédex 15 (FR)
(72) Inventeur: Gaud, Pierre, F-38120 Saint-Egreve (FR); Sibuet, Henri, F-38120 Fontanil-Cornillon (FR)
(74) Mandataire: Signore, Robert

(57) **Abrégé**

Selon l'invention, on réalise en une seule opération le pont magnétique (70) reliant les deux pièces polaires (30₁, 30₂) et le pont conducteur (75) reliant les deux bobinages (50₁, 50₂).

Application à l'enregistrement magnétique.

## Description

### Domaine technique

La présente invention a pour objet un procédé de réalisation d'une tête magnétique verticale et une tête magnétique correspondante.

Elle trouve une application privilégiée dans l'enregistrement vidéo grand public. Mais elle peut être utilisée aussi dans d'autres domaines, comme celui des sauvegardes de données ou celui des mémoires d'ordinateur.

### Etat de la technique antérieure

Un support d'enregistrement magnétique pour matériau vidéo, sauvegarde de données ou mémoire d'ordinateur, comprend de nombreuses pistes sur lesquelles sont inscrites des informations sous forme de domaines magnétiques.

Pour augmenter la densité d'informations, on augmente non seulement le nombre d'informations par unité de longueur, mais encore le nombre de pistes. Pour cela, on dimine la largeur des pistes, et, simultanément, l'intervalle les séparant, jusqu'à les rendre jointives.

Aujourd'hui, répondant à ces objectifs, on trouve principalement sur le marché deux types de têtes : des têtes dites à "métal dans l'entrefer" (en anglais "Metal-in-Gap"), et des têtes dites "sandwich".

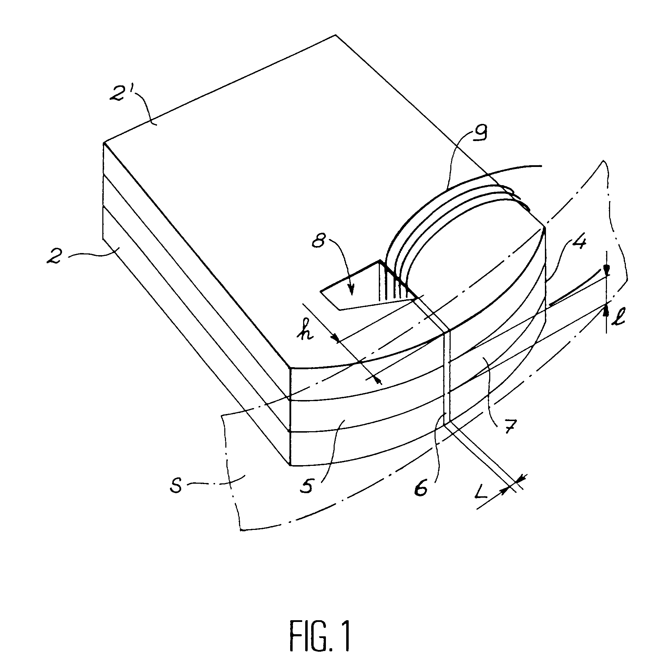

La figure 1 annexée illustre un exemple de tête de ce second type. La tête représentée comprend un substrat 2 supportant un circuit magnétique 4 constitué par une couche magnétique déposée sur la face supérieure du substrat, ce circuit présentant à l'avant deux pièces polaires 5 et 7 séparées par un entrefer 6, qui est formé par un espaceur amagnétique. Cette tête comprend en outre, au-dessus du circuit magnétique, un superstrat 2' amagnétique. Par ailleurs, la tête comprend encore une ouverture 8 percée à travers la couche magnétique, le substrat, et le superstrat ainsi qu'un enroulement conducteur 9 empruntant l'ouverture 8.

La tête représentée sur la figure 1 est destinée à coopérer avec un support d'enregistrement S orienté perpendiculairement au substrat, (ou, ce qui revient au même, parallèlement à la tranche de celui-ci).

De telles têtes peuvent être qualifiées de "verticales" en ce sens que la surface active est perpendiculaire à la surface du substrat de départ.

La largeur de l'entrefer, notée ℓ, est comptée perpendiculairement au substrat (ou, ce qui revient au même, parallèlement au support d'enregistrement). Cette largeur ℓ correspond sensiblement à la largeur respective des pistes du support. Sa longueur, notée L, est comptée dans le sens du déplacement relatif de la tête et du support d'enregistrement S. Quant à la hauteur de l'entrefer, notée h, elle est comptée parallèlement à la face du substrat supportant le circuit magnétique.

On ne confondra pas ce genre de têtes avec les têtes dites "horizontales" où l'entrefer affleure sur une face parallèle au substrat et où le support d'enregistrement se déplace parallèlement à cette face du substrat. Une tête horizontale est décrite par exemple dans le document FR-A-2 604 021.

L'une des différences essentielles entre les têtes verticales de type sandwich et les têtes horizontales (outre des différences évidentes de structure et de réalisation), tient à ce que, dans ces dernières, la largeur de l'entrefer (correspondant à la largeur de la piste) est définie par lithographie, tandis que la dimension affectée par l'usure de la tête est définie par l'épaisseur du matériau magnétique déposé. Dans les têtes verticales de type sandwich comme celle de la figure 1, au contraire, c'est la largeur de l'entrefer *ℓ* qui est définie par l'épaisseur du matériau magnétique déposé, tandis que l'usure affecte la hauteur h, laquelle est ajustée par lithographie.

La réalisation pratique des têtes verticales de type sandwich telles que celle de la figure 1 implique un grand nombre d'opérations de micromécanique et de soudures à haute température. La réalisation est le plus souvent unitaire, c'est-à-dire non collective.

Certains procédés de réalisation sont notamment décrits dans l'ouvrage intitulé "Recent Magnetics for Electronics", JARECT, vol. 10, Chapitre 11, p. 121-133, 1983, édité par Y SAKURAI, North-Holland, ainsi que dans l'ouvrage intitulé "The Complete Handbook of Magnetic Recording", F. JORGENSEN, Chapitre 9, p. 196-216, 1988, édité par TAS BOOKS Inc.

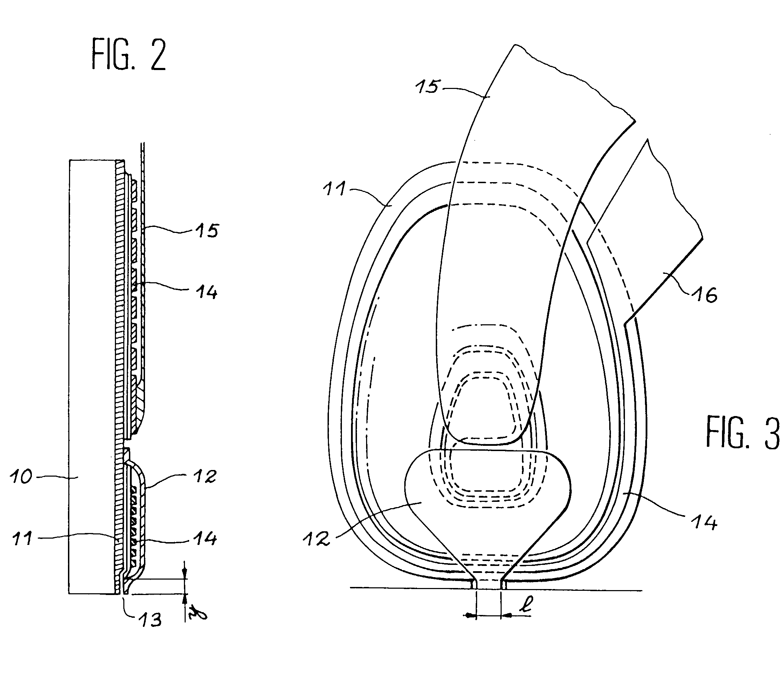

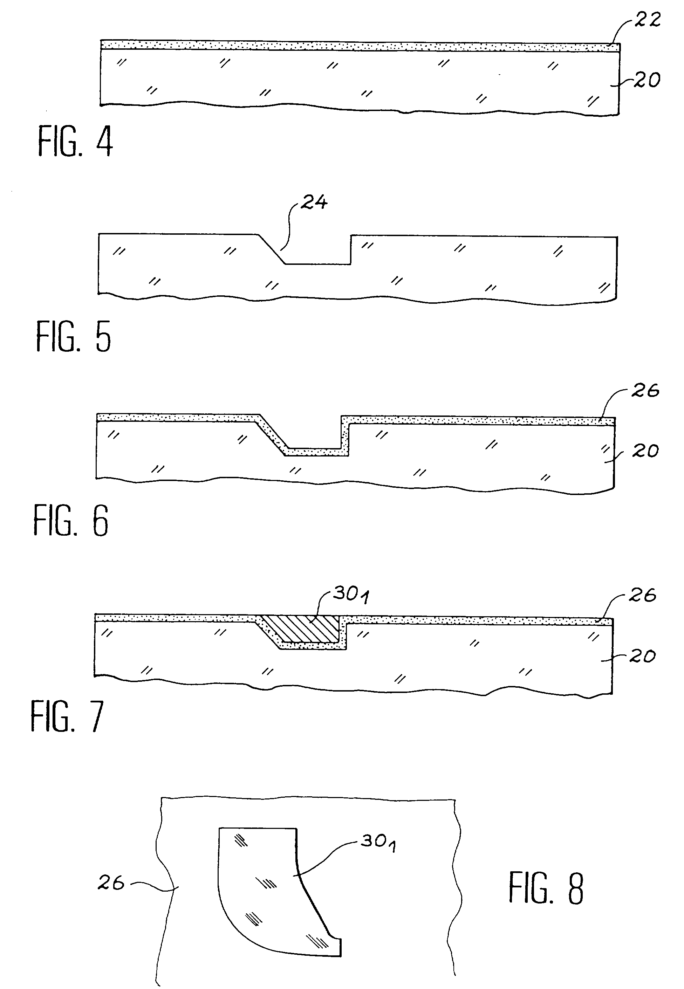

On connaît, par ailleurs, des têtes verticales telles que représentées sur les figures 2 et 3 utilisant des couches minces et un bobinage intégré. Ces têtes comprennent une couche magnétique inférieure 11 et une couche magnétique supérieure 12, cette dernière chevauchant la couche magnétique inférieure 11 et venant prendre contact avec celle-ci à l'arrière mais laissant à l'avant un entrefer 13. Entre ces deux couches magnétiques et entourant la partie arrière, on trouve un enroulement conducteur 14 intégré dans la structure. Cet enroulement est relié à deux connexions 15 et 16, la connexion 15 venant prendre contact au centre de l'enroulement.

De telles têtes sont décrites par exemple dans l'ouvrage de F. JORGENSEN intitulé "The Complete Handbook of Magnetic Recording", troisième édition, 1988, édité par TAB BOOKS INC, chapitre 9, "Manufacture of Head Assemblies", pp. 190-216, en particulier page 205.

Bien que donnant satisfaction à certains égards, ces têtes présentent des inconvénients, en particulier en raison de la structure des pièces polaires. Ces pièces (11, 12) sont juxtaposées dans la région de l'entrefer (13) de sorte que la largeur de celui-ci, correspondant à la largeur de la piste à lire, est égal à la largeur des extrémités des pièces polaires (direction horizontale sur la figure 3).

La hauteur de l'entrefer, h (voir figure 2) ne doit pas être trop importante de façon à éviter les problèmes de saturation magnétique dans les pôles (ce qui réduit l'efficacité de cette tête). Cette hauteur d'entrefer réduite est contraire à ce qui est nécessaire pour un comportement satisfaisant à l'usure. Cette hauteur h est définie par polissage des pièces polaires.

Par ailleurs, l'abrégé de brevet japonais, vol. 13, n°98 (P-840)(3446), l'abrégé de brevet japonais, vol. 13, n°85 (P-834) (3443) ainsi que l'abrégé de brevet japonais, vol. 13, n°322, (P-902) (3670) décrivent des têtes magnétiques comprenant, sur un même substrat, deux pièces polaires séparées par un entrefer et deux enroulements conducteurs disposés au-dessus des deux pièces polaires. Un pont magnétique prend contact avec les deux pièces polaires et enjambe les deux enroulements.

Cette technique présente des inconvénients en ce qui concerne le procédé de réalisation. Il faut en effet prévoir deux opérations distinctes et différentes pour réaliser d'une part, le pont magnétique reliant les deux pièces polaires et d'autre part, le moyen d'interconnexion des deux enroulements conducteurs.

La présente invention a justement pour objet un procédé de réalisation d'une tête magnétique qui évite cet inconvénient car il permet, en une seule opération, de réaliser un pont magnétique et un pont conducteur en un seul et même matériau.

### Exposé de l'invention

De manière plus précise, la présente invention a pour objet un procédé de réalisation d'une tête magnétique verticale à bobinage intégré, consistant à :
- réaliser sur un substrat un espaceur amagnétique,
- déposer de part et d'autre de l'espaceur une première pièce polaire et une seconde pièce polaire,
- déposer sur la première et la seconde pièces polaires, une couche isolante,
- graver dans cette couche isolante une première gorge spiralée au-dessus de la première pièce polaire et une seconde gorge spiralée au-dessus de la seconde pièce polaire,
- remplir les première et seconde gorges d'un matériau conducteur pour obtenir un premier et un second bobinages,
caractérisé par le fait qu'il comprend en outre les opérations suivantes :
- on recouvre l'ensemble d'une autre couche isolante,
- on ouvre dans cette autre couche isolante une première et une seconde ouvertures au centre respectivement du premier et du second bobinages, ces ouvertures allant jusqu'à la première et la seconde pièce polaires,
- on ouvre encore dans ladite autre couche isolante une première ouverture au-dessus d'une première extrémité du premier bobinage et une seconde ouverture au-dessus d'une première extrémité du second bobinage,
- on forme un pont en matériau magnétique avec une première jambe empruntant la première ouverture allant jusqu'à la première pièce polaire et prenant contact avec cette première pièce polaire et avec une seconde jambe empruntant la seconde ouverture allant jusqu'à la seconde pièce polaire et prenant contact avec cette seconde pièce polaire et l'on forme un pont conducteur empruntant la première et la seconde ouvertures, au-dessus des première et seconde extrémités des premier et second bobinages, le pont magnétique et le pont conducteur étant formés en une seule opération à partir d'un même matériau.

De préférence, l'opération unique de formation des ponts magnétique et conducteur est une croissance électrolytique d'un même métal, par exemple du fer-nickel.

La présente invention a également pour objet une tête magnétique verticale obtenue par le procédé qui vient d'être défini. Cette tête comprend un substrat, un circuit magnétique comprenant une première et une second pièces polaires disposées côte à côte sur le substrat et séparées par un entrefer, et un enroulement conducteur entourant le circuit magnétique, la première et la seconde pièces polaires étant des couches minces en matériau magnétique déposées sur le substrat, ces couches encadrant l'entrefer, l'enroulement conducteur étant formé d'un premier bobinage conducteur et d'un second bobinage conducteur tous deux disposés côte à côte et intégrés dans une même couche isolante recouvrant la première et la seconde pièces polaires, le premier bobinage étant placé au-dessus de la première pièce polaire et le second bobinage au-dessus de la seconde pièce polaire, cette tête étant caractérisée par le fait qu'elle comprend en outre une pièce magnétique en forme de pont avec une première jambe en contact avec la première pièce polaire au centre du premier bobinage et avec une seconde jambe en contact avec la seconde pièce polaire au centre du second bobinage et un pont conducteur connectant une première extrémité du premier bobinage à une première extrémité du second bobinage, ce pont magnétique et ce pont conducteur étant en un même matériau.

### Brève description des dessins

- la figure 1 illustre une tête magnétique connue à structure verticale de type sandwich ;
- la figure 2 illustre une autre tête magnétique connue à pièces polaires superposées, en vue de côté ;
- la figure 3 montre la même tête mais en vue de dessus ;
- la figure 4 montre une première étape d'un procédé de fabrication conforme à l'invention ;
- la figure 5 montre le résultat d'une première gravure avec formation d'un premier caisson ;
- la figure 6 montre une étape de dépôt d'une couche isolante ;
- la figure 7 montre, en coupe, la première pièce polaire ;
- la figure 8 montre cette même première pièce polaire mais en vue de dessus ;
- la figure 9 montre une étape de préparation d'une deuxième gravure ;
- la figure 10 montre la formation d'un deuxième caisson ;
- la figure 11 montre, en coupe, la deuxième pièce polaire ;
- la figure 12 montre, en vue de dessus, les deux pièces polaires ;
- la figure 13 illustre une étape de dépôt de la couche d'isolant dans laquelle l'enroulement sera réalisé ;
- la figure 14 illustre la réalisation de gorges dans la couche d'isolant ;
- la figure 15 montre une sous-couche pour une opération de croissance électrolytique ;
- la figure 16 montre un sous-ensemble après dépôt électrolytique d'une couche conductrice ;
- la figure 17 illustre cet ensemble après rodage et dépôt d'une nouvelle couche isolante ;
- la figure 18 montre, en vue de dessus, l'allure des deux bobinages avec les emplacements des futurs plots de connexion ;
- la figure 19 illustre la réalisation d'ouvertures dans la couche isolante ;
- la figure 20 montre une couche de résine préparée pour une opération de croissance électrolytique ;
- la figure 21 montre un sous-ensemble après dépôt électrolytique avec un pont magnétique de fermeture du circuit magnétique ;
- la figure 22 montre la préparation de la réalisation de plots de connexion ;
- la figure 23 montre un plot de connexion après croissance électrolytique ;
- la figure 24 montre ce plot planarisé ;
- la figure 25 montre, en vue de dessus, les deux bobinages, le pont magnétique, le pont conducteur et les plots de connexion de l'enroulement ;
- la figure 26 illustre, en coupe, une variante du procédé dans laquelle on forme une surépaisseur sur les pièces polaires ;
- la figure 27 montre, en vue de dessus, les pièces polaires et leur surépaisseur.

### Description de modes particuliers de réalisation

On va décrire en liaison avec les figures 4 à 24, un exemple de réalisation d'une tête magnétique selon l'invention. Il va de soi que les matériaux mentionnés et les dimensions indiquées ne sont donnés qu'à titre explicatif et nullement limitatif.

On part d'un substrat 20 en silicium, d'orientation cristallographique <110> (figure 4). Sur ce substrat, on dépose une couche d'isolant 22, en Si₃N₄, par la technique LPCVD ("Low Pressure Chemical Vapor Deposition"), cette couche isolante 22 a une épaisseur de 40 nm. Par une opération de lithographie, on définit la forme de la première pièce polaire et l'on dispose divers repères de rodage. On grave alors la couche 22 de Si₃N₄ et on supprime la résine du masque. On effectue alors une gravure anisotrope du substrat en silicium, par une solution de KOH (70°C-38%) ce qui donne naissance à un premier caisson 24 à flanc incliné. On supprime ensuite la couche 22 de Si₃N₄ (figure 5).

On effectue ensuite une oxydation thermique de l'ensemble ce qui crée une couche d'oxyde 26 sur l'ensemble. Cette couche peut avoir une épaisseur de 0,2 µm.

On dépose ensuite un matériau magnétique dans le caisson. On peut procéder, par exemple, par croissance électrolytique. Pour cela, on déposera une sous-couche conductrice par pulvérisation cathodique, par exemple en NiFe de 0,1 µm d'épaisseur. Par une première lithographie, on forme un masque présentant une ouverture en regard de la sous-couche disposée dans le fond du caisson. On effectue ensuite une électrolyse, de NiFe par exemple sous champ magnétique, pour obtenir des domaines magnétiques orientés parallèlement à l'entrefer. On supprime ensuite la résine.

Au lieu d'opérer par dépôt par croissance électrolytique, on pourrait déposer un matériau magnétique comme le Sendust directement par pulvérisation cathodique puis gravure à travers un masque lithographique.

On pourrait opérer aussi en deux fois et intercaler une couche d'isolant, par exemple en SiO₂, entre deux phases d'électrolyse de NiFe, pour améliorer les performances à haute fréquence. (Les deux phases d'électrolyse sont précédées d'un dépôt d'une couche conductrice et d'un masque).

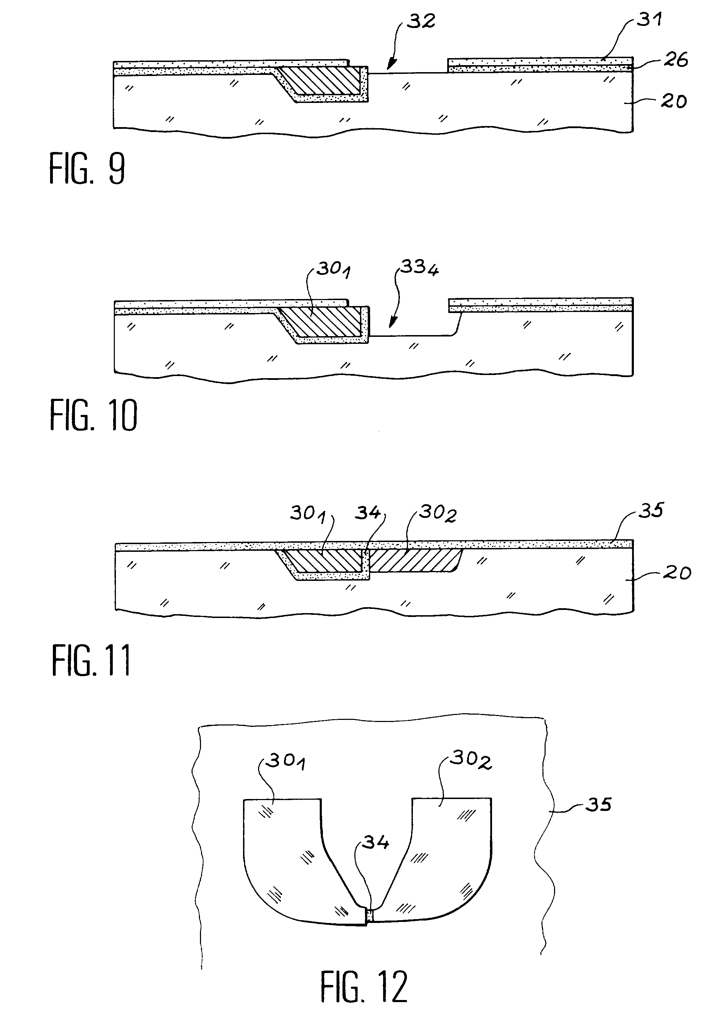

On effectue ensuite une planarisation mécanique jusqu'à s'arrêter sur un plan dans la couche 26 et l'on obtient alors la première pièce polaire 30₁. Cette pièce est représentée en coupe sur la figure 7 et en vue de dessus sur la figure 8.

On dépose ensuite sur le sous-ensemble obtenu une seconde couche isolante 31, en SiO₂, d'épaisseur 0,2 µm. Par lithographie, on définit alors une ouverture 32 et par une gravure prenant pour masque la couche 31 de SiO₂ et ce qu'il reste de la couche 26, on creuse un second caisson 33₄ par gravure isotrope du silicium, par exemple par plasma à microondes. On supprime le masque 31 en SiO₂ et ce qu'il reste de la couche 26 et l'on dépose un matériau magnétique 30₂ dans le second caisson. On peut procéder encore par croissance électrolytique de NiFe, comme précédemment ou par dépôt de Sendust par pulvérisation cathodique.

On planarise l'ensemble mécaniquement jusqu'à faire apparaître l'entrefer 34. On dépose alors une couche 35 de SiO₂, de 1 µm d'épaisseur par exemple. On obtient alors les deux pièces polaires 30₁ et 30₂ telles qu'elles sont représentées en coupe sur la figure 11 et en vue de dessus sur la figure 12.

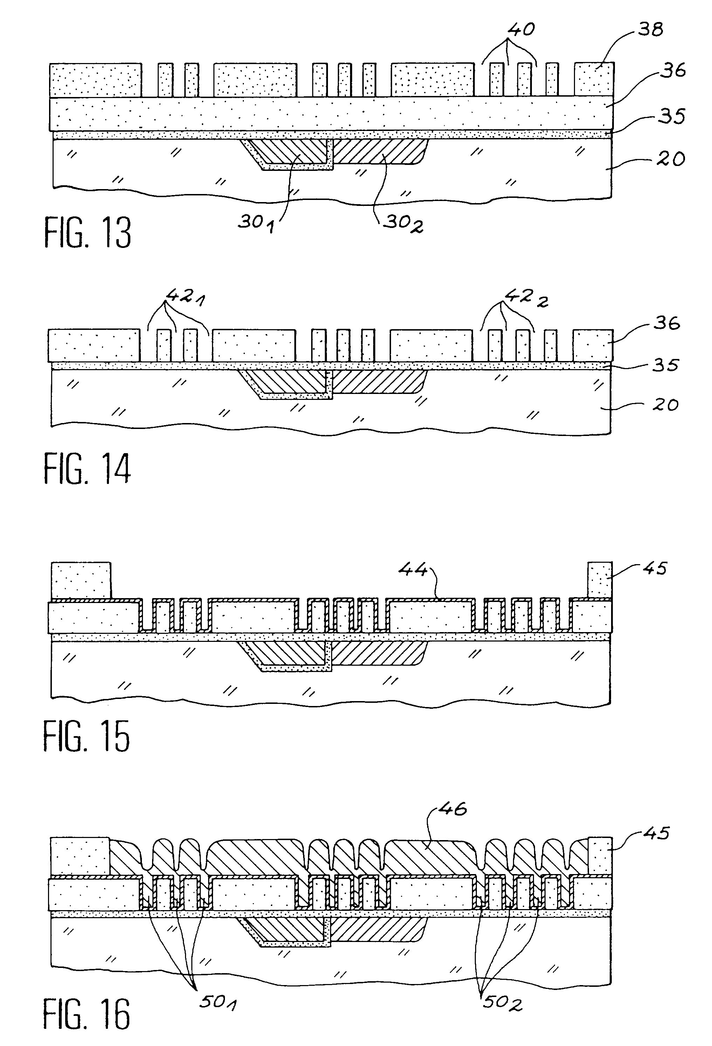

Le procédé se poursuit par la réalisation de l'enroulement et de ses deux bobinages. Pour cela, on commence par déposer une couche isolante 36 de SiO₂, d'épaisseur 3 µm par exemple (figure 13). On dépose sur cette couche de SiO₂ une couche de résine 38 dans laquelle, par lithographie, on définit des ouvertures 40 (par exemple 40 tours pour chaque futur bobinage).

On grave ensuite la couche 36 de SiO₂ à travers le masque 38, par exemple par gravure ionique réactive. On supprime ensuite la résine 38 et l'on obtient le sous-ensemble de la figure 14.

On dépose alors une sous-couche d'électrolyse 44 sur l'ensemble, par exemple en chrome-cuivre, d'une épaisseur totale de 0,2 µm par exemple. Cette couche peut être déposée par pulvérisation cathodique. On dépose ensuite une résine 45 dans laquelle on ménage une ouverture qui va définir un caisson de dépôt électrolytique. Ce caisson doit avoir une profondeur supérieure à 1 µm, par exemple 4 µm (figure 15).

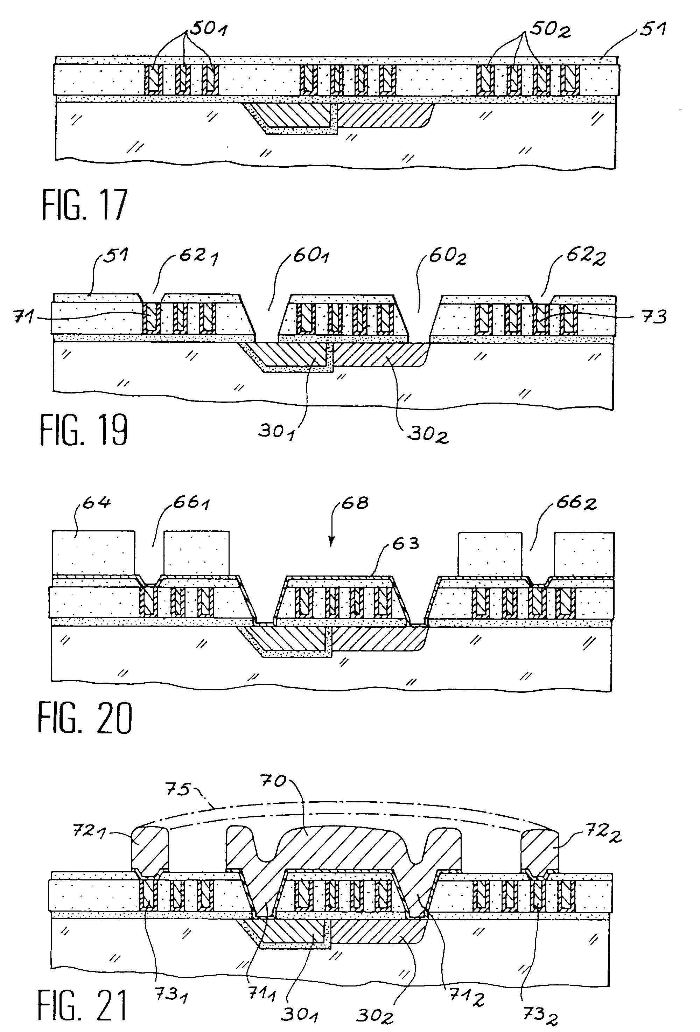

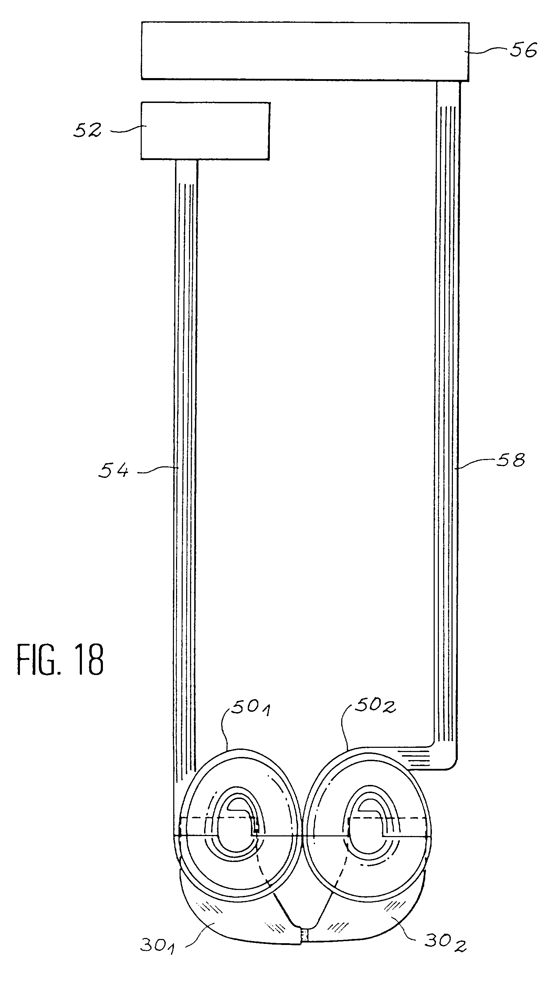

On effectue alors l'opération de croissance électrolytique en prenant la couche 44 comme électrode on forme ainsi une couche métallique 46. On supprime ensuite la résine 45, on élimine par usinage ionique la sous-couche d'électrolyse ainsi dégagée. On planarise alors l'ensemble jusqu'à mettre à nu la couche 36 et on dépose une couche d'isolation électrique 51 en SiO₂ d'épaisseur 1 µm par exemple. On obtient le sous-ensemble de la figure 17.

La figure 18 montre, en vue de dessus, les deux bobinages 50₁, 50₂, les emplacements 52 et 56 des futurs plots de contact et les connexions 54, 58 reliant ces emplacements aux deux bobinages.

On poursuit le procédé en ménageant diverses ouvertures dans la couche isolante 51, à savoir des ouvertures 60₁ et 60₂ au-dessus des première et deuxième pièces polaires ainsi que des ouvertures 62₁ et 62₂ au-dessus de certaines spires du bobinage (figure 19). On dépose ensuite une sous-couche d'électrolyse 63 par pulvérisation cathodique. On peut utiliser le NiFe d'épaisseur 0,1 µm.

On dépose ensuite une résine 64 dans laquelle on ménage des ouvertures 66₁ et 66₂ au-dessus des zones des futurs contacts électriques et 68 au-dessus de l'emplacement du futur pont magnétique (figure 20). Par électrolyse d'un seul et même métal, par exemple du NiFe, on réalise alors simultanément et en une seule opération un pont magnétique 70 et un pont électrique 75 (figure 21).

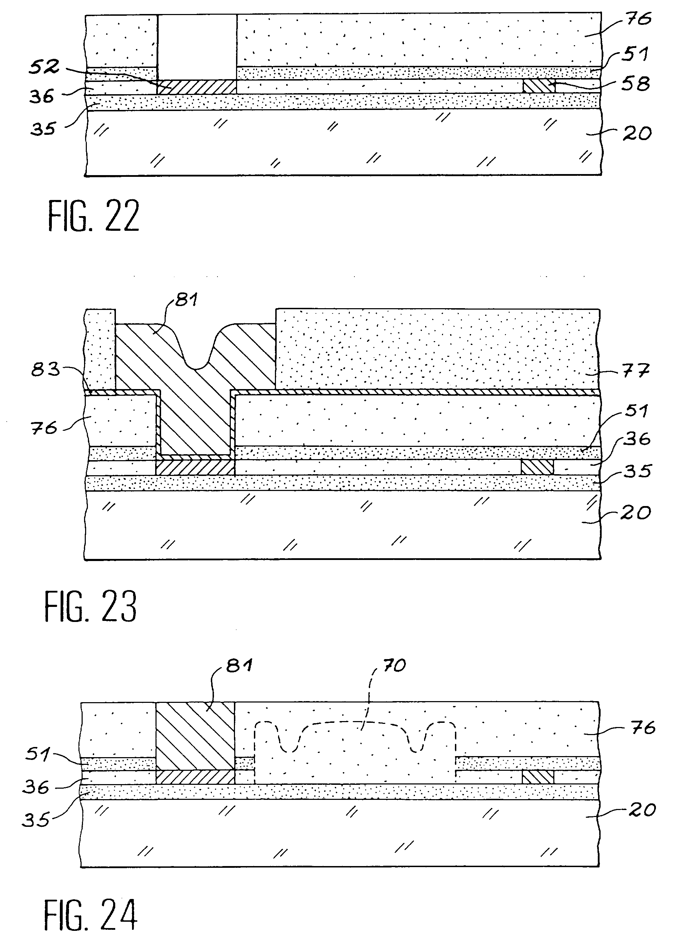

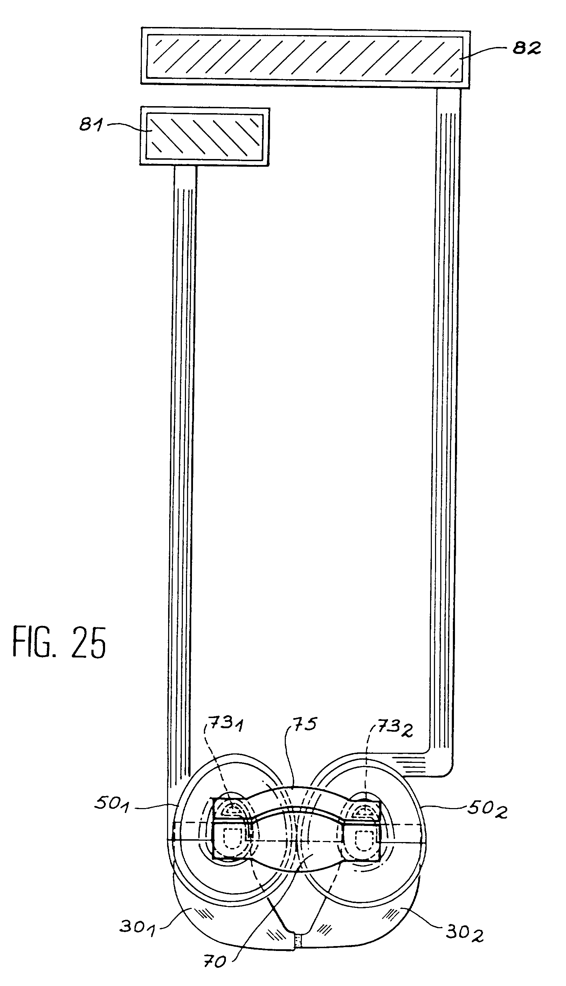

Pour former les plots de contact électrique, on dépose une couche isolante 76 (figure 22) sur la structure précédemment obtenue que l'on ouvre au-dessus des extrémités 52 et 56 des connexions de l'enroulement. On dépose ensuite, sur l'ensemble, une sous-couche d'électrolyse 83, par exemple en CrAu de 0,2 µm d'épaisseur. On dépose ensuite une couche de résine 77 (figure 23) dans laquelle on ménage une ouverture pour la croissance électrolytique. Par électrolyse d'or, on forme deux plots 81-82. On enlève la résine 77 et l'on planarise le tout pour laisser subsister les deux plots 81, 82 (un seul est représenté en coupe sur la figure 24) . La figure 25 montre l'ensemble en vue de dessus.

Les couches utilisées ont une hauteur telle qu'après planarisation, les plots 81, 82 aient une hauteur supérieure aux ponts 70 et 75 de sorte que ceux-ci se trouvent enterrés dans la couche d'isolant 76.

Toutes les opérations qui viennent d'être décrites peuvent être obtenues de manière collective sur un même substrat. Il restera alors, par des opérations classiques de micromécanique, à séparer les différentes têtes les unes des autres.

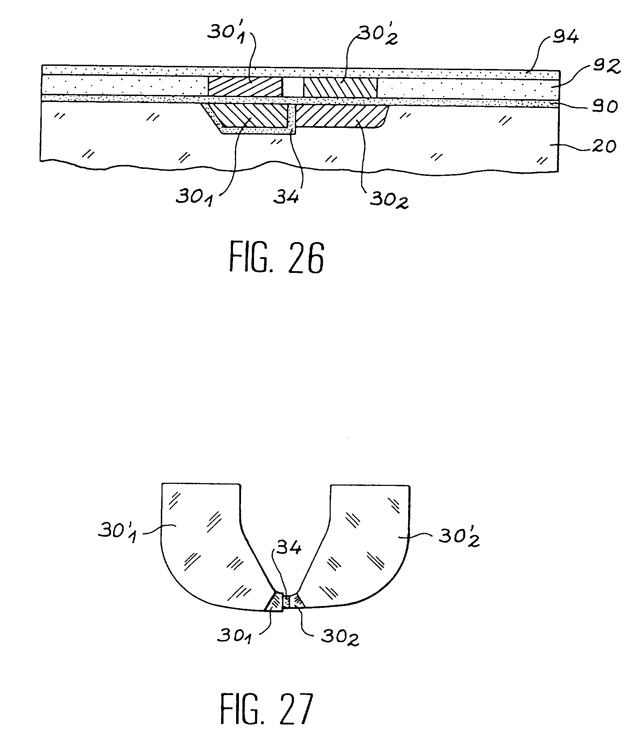

Dans une variante de réalisation, on renforce l'épaisseur des pièces magnétiques en ajoutant une surépaisseur. C'est ce qui est représenté sur les figures 26 et 27. Ayant obtenu les pièces polaires 30₁ et 30₂, on dépose une couche isolante 90 fine de SiO₂, par exemple de 0,2 µm d'épaisseur. On dépose ensuite une couche 92 de SiO₂ d'épaisseur 3 µm dans laquelle on grave des caissons dont la forme correspond sensiblement aux pièces polaires déjà réalisées. Par croissance électrolytique de NiFe ou par pulvérisation cathodique de Sendust, on réalise des surépaisseurs 30'₁ et 30'₂ au-dessus des première et seconde pièces polaires. On effectue ensuite une planarisation mécanique et on dépose sur l'ensemble une couche 94 de SiO₂ de 1 µm pour l'isolation électrique.

La figure 26 représente les pièces polaires et leurs surépaisseurs en coupe et la figure 27 ces mêmes pièces en vue de dessus.

## Revendications

1. Procédé de réalisation d'une tête magnétique verticale à bobinage intégré, consistant à :
- réaliser sur un substrat (2, 20) un espaceur amagnétique (6, 34),
- déposer de part et d'autre de l'espaceur (6, 34) une première pièce polaire (5, 30₁) et une seconde pièce polaire (7, 30₂),
- déposer sur la première et la seconde pièces polaires (30₁, 30₂), une couche isolante (38),
- graver dans cette couche isolante (38) une première gorge spiralée (42₁) au-dessus de la première pièce polaire (30₁) et une seconde gorge spiralée (42₂) au-dessus de la seconde pièce polaire (30₂),
- remplir les première et seconde gorges d'un matériau conducteur (46) pour obtenir un premier et un second bobinages (50₁, 50₂),
caractérisé par le fait qu'il comprend en outre les opérations suivantes :
- on recouvre l'ensemble d'une autre couche isolante (51),
- on ouvre dans cette autre couche isolante (51) une première et une seconde ouvertures (60₁, 60₂) au centre respectivement du premier et du second bobinages (50₁, 50₂), ces ouvertures (60₁, 60₂) allant jusqu'à la première et la seconde pièces polaires (30₁, 30₂),
- on ouvre encore dans ladite autre couche isolante (51) une première ouverture (62₁) au-dessus d'une première extrémité (73₁) du premier bobinage (50₁) et une seconde ouverture (62₂) au-dessus d'une première extrémité (73₂) du second bobinage (50₂),
- on forme un pont (70) en matériau magnétique avec une première jambe (71₁) empruntant la première ouverture (60₁) allant jusqu'à la première pièce polaire et prenant contact avec cette première pièce polaire (30₁) et avec une seconde jambe (71₂) empruntant la seconde ouverture (60₂) allant jusqu'à la seconde pièce polaire et prenant contact avec cette seconde pièce polaire (30₂) et l'on forme un pont conducteur (75) empruntant la première et la seconde ouvertures (62₁, 62₂), au-dessus des première et seconde extrémités des premier et second bobinages, le pont magnétique (70) et le pont conducteur (75) étant formés en une seule opération à partir d'un même matériau.

2. Procédé selon la revendication 1, caractérisé par le fait que l'opération unique de formation des ponts magnétique (70) et conducteur (75) est une croissance électrolytique d'un même métal.

3. Procédé selon la revendication 2, caractérisé par le fait que le métal est du fer-nickel.

4. Procédé selon la revendication 1, caractérisé par le fait que l'on forme deux plots de connexion (81, 82) à deux extrémités de l'enroulement par croissance électrolytique d'un métal, ces plots ayant une épaisseur supérieure à l'épaisseur des ponts magnétique (70) et conducteur (75) et dans des ouvertures ménagées dans une couche isolante ayant une épaisseur supérieure à l'épaisseur des ponts magnétique (70) et conducteur (75).

5. Procédé selon la revendication 1, caractérisé par le fait qu'après avoir déposé la première et la seconde pièces polaires (30₁, 30₂) de part et d'autre de l'espaceur (34), on dépose sur chacune de ces première et seconde pièces une surépaisseur (30'₁, 30'₂) en matériau magnétique en dehors de la zone d'entrefer.

6. Tête magnétique verticale de type sandwich obtenue par le procédé de la revendication 1, cette tête comprenant un substrat (2), un circuit magnétique comprenant une première et une seconde pièces polaires (5, 7) disposées côte à côte sur le substrat (2) et séparées par un entrefer (6), et un enroulement conducteur (9) entourant le circuit magnétique, la première et la seconde pièces polaires (30₁, 30₂) étant des couches minces en matériau magnétique déposées sur le substrat (20), ces couches encadrant l'entrefer (34), l'enroulement conducteur étant formé d'un premier bobinage conducteur (50₁) et d'un second bobinage conducteur (50₂) tous deux disposés côte à côte et intégrés dans une même couche isolante (38) recouvrant la première et la seconde pièce polaire (30₁, 30₂), le premier bobinage (50₁) étant placé au-dessus de la première pièce polaire (30₁) et le second bobinage (50₂) au-dessus de la seconde pièce polaire (30₂), cette tête étant caractérisée par le fait qu'elle comprend en outre une pièce magnétique (70) en forme de pont avec une première jambe (74) en contact avec la première pièce polaire (30₁) au centre du premier bobinage (50₁) et avec une seconde jambe (71₂) en contact avec la seconde pièce polaire (30₂) au centre du second bobinage (50₂) et un pont conducteur (75) connectant une première extrémité (73₁) du premier bobinage (50₁) à une première extrémité (73₂) du second bobinage (50₂), ce pont magnétique et ce pont conducteur étant en un même matériau.

7. Tête magnétique selon la revendication 6, caractérisée par le fait que le matériau commun au pont magnétique et au pont conducteur est un métal déposé électrolytiquement.

8. Tête magnétique selon la revendication 7, caractérisée par le fait que le métal est du fer-nickel.

9. Tête magnétique selon la revendication 6, caractérisée par le fait que chaque pièce polaire (30₁, 30₂) comprend une surépaisseur (30'₁, 30'₂) en matériau magnétique en dehors de la zone d'entrefer (34).

10. Tête magnétique selon la revendication 6, caractérisée par le fait qu'elle comprend deux plots de connexion (52, 56, 81, 82) reliés à des secondes extrémités des premier et second bobinages (50₁, 50₂).
